# EUROPÄISCHE PATENTSCHRIFT

(11) **EP 3 680 124 B1**
(45) Veröffentlichungstag und Bekanntmachung des Hinweises auf die Patenterteilung: **18.06.2025**
(21) Anmeldenummer: 20150405.7
(22) Anmeldetag: 07.01.2020
(51) Int. Cl.: B60L 53/14, B60L 53/31, H04B 3/54, B60L 53/30, B60L 53/60

(54) **GERÄT ZUR ABGABE VON ELEKTRISCHER ENERGIE**
METHOD FOR SUPPLYING ELECTRICAL ENERGY
APPAREIL DE DISTRIBUTION DE L'ÉNERGIE ÉLECTRIQUE

(30) Priorität: 11.01.2019 DE 102019100609
(43) Veröffentlichungstag der Anmeldung: 15.07.2020
(73) Patentinhaber: Weiss+Appetito Communication GmbH, 47269 Duisburg (DE); ABH Stromschienen GmbH, 47169 Duisburg (DE)
(72) Erfinder: Daumann, Walter, 40627 Düsseldorf (DE); Han, Hüseyin, 47199 Duisburg (DE)
(74) Vertreter: Kreuels, Justus

(56) Entgegenhaltungen:
- EP-A1- 3 005 507
- EP-A2- 2 377 208
- EP-B1- 3 005 507
- CN-A- 105 711 436
- DE-A1- 102009 026 936
- DE-A1- 102013 203 634
- DE-A1- 102016 201 505
- DE-A1- 102017 105 014
- DE-U1- 202017 101 677
- US-A1- 2012 309 455
- US-A1- 2014 266 046
- HP BUSBARS: "viele Ladepunkte einfach, schnell und sicher - hp-busbars.de", 31 December 2016 (2016-12-31), XP055690131, Retrieved from the Internet <URL:https://hp-busbars.de/viele-ladepunkte-einfach-schnell-und-sicher/> [retrieved on 20200429]
- RENUGEN: "EVolt Smart Wall Box Model - 22kW - Three Phase - renugen", 31 December 2016 (2016-12-31), XP055690163, Retrieved from the Internet <URL:https://www.renugen.co.uk/evolt-smart-wall-box-model-22kw-three-phase/> [retrieved on 20200429]
- SIEMENS ET AL: "Configu- ration Manual Edition 10/2015", 31 October 2015 (2015-10-31), XP055690244, Retrieved from the Internet <URL:https://cache.industry.siemens.com/dl/files/793/81379793/att_871024/v1/SENTRON_LV10-PH10_complete_English_10-2015_201603161113003955.pdf> [retrieved on 20200429]

## Beschreibung

Die Erfindung betrifft ein Gerät zur Abgabe von elektrischer Energie, insbesondere zur Abgabe von elektrischer Energie an einen elektrischen Speicher eines Kraftfahrzeuges.

Ein derartiges Abgabegerät kann beispielsweise neben oder an einem Parkplatz für ein Kraftfahrzeug mit einem elektrischen Speicher positioniert sein, um den elektrischen Speicher des Kraftfahrzeuges aufzuladen.

Im Rahmen der Energiewende besteht in letzter Zeit ein sehr schnell wachsender Bedarf an Parkplätzen, an welchen die elektrischen Speicher elektrisch betriebener Kraftfahrzeuge geladen werden können. Solche Parkplätze sind eine wesentliche Grundvoraussetzung dafür, dass flächendeckende Konzepte der elektrischen Mobilität überhaupt umsetzbar sind. Solche Parkplätze müssen vorzugsweise sowohl im öffentlichen oder halböffentlichem (beispielsweise in Parkhäusern, an Straßen etc.) als auch im privaten Raum (beispielsweise in privaten Garagen, Quartiersgaragen oder jeder anderen Art von für den Publikumsverkehr verschlossenen Parkplätzen) vorhanden sein, damit die Mobilität mit elektrischen Kraftfahrzeugen in für den Nutzer annehmbarer Weise möglich ist.

Solche Parkplätze stellen einen wesentlichen Aspekt der Infrastruktur für die Elektromobilität dar.

Ein ganz wesentliches Problem bei der Bereitstellung von Infrastruktur für die Elektromobilität sind allerdings die hohen Kosten, die durch die Bereitstellung von Infrastruktur entstehen.

Diese Kosten sind insbesondere ein Problem vor dem Hintergrund, dass eine Amortisation von Investitionen in derartige Infrastruktur heute in einem absehbaren Zeitraum meist nicht möglich ist. Einerseits sind die Gewinnmargen, die mit der Bereitstellung von Parkplätzen für das elektrische Laden von Kraftfahrzeugen erzielt werden können, so gering, dass die hohen Investitionskosten ohnehin schon schwer einzuspielen sind. Andererseits wird dies noch zusätzlich dadurch verstärkt, dass bisher nur wenige elektrisch betriebene Kraftfahrzeuge im Verkehr sind. Hierdurch treten normalerweise sehr hohe Schwankungen in dem Bedarf an Parkplätzen mit der Möglichkeit des elektrischen Ladens von Kraftfahrzeugen auf. Insbesondere ist es für größere Anzahlen von Parkplätzen sehr schwer, eine konstante und dauerhaft hohe Auslastung zu gewährleisten.

Ein weiteres sehr wichtiges Problem rund um das Laden von elektrisch betriebenen Kraftfahrzeugen im Rahmen von Mobilitätskonzepten ist die Steuerung und Kommunikation der einzelnen, für den Ladevorgang relevanten Komponenten untereinander. Dies ist insbesondere relevant für eine individuelle Abrechnung von Ladevorgängen, welche häufig ein großes Problem darstellt. Elektrische Energie wird über das Stromnetz bereitgestellt und von den Stromnetzbetreibern normalerweise über Stromzähler abgerechnet. Das Anbieten von Lademöglichkeiten für elektrisch betriebene Kraftfahrzeuge stellt letztlich einen Weiterverkauf von elektrischer Energie durch denjenigen dar, an dessen Stromzähler die Lademöglichkeit angeschlossen ist. Der Inhaber des Stromzählers benötigt deswegen sehr exakte Verbrauchsdaten, die die an das elektrische Kraftfahrzeug übertragene und aus Sicht des Betreibers der Lademöglichkeit verbrauchte elektrische Energie quantifizierbar macht.

Darüber hinaus ist eine sichere Zugriffsmöglichkeit auf denjenigen notwendig, der für das elektrisch betriebene Kraftfahrzeug, welches geladen wurde, verantwortlich ist, um eine Abrechnung eines Ladevorgangs eines Kraftfahrzeugs durchzuführen.

Das zusammen (die exakte Kenntnis von Verbrauchsdaten, sowie die Möglichkeit eine Abrechnung mit dem für das Kraftfahrzeug Verantwortlichen durchzuführen) sind Grundvoraussetzung für ein erfolgreiches Geschäft mit Lademöglichkeiten für elektrisch betriebene Kraftfahrzeuge.

Aus der DE 10 2013 203 634 A1 ist es bekannt Ladesäulen auf am Boden verlaufenden Stromschienen aufzusetzen.

Aus der CN 105711436 A ist es bekannt Ladestationen an Anschlussenden von t-förmigen Verteilerelementen eines Stromschienensystems anzuschließen.

Weitere Details zu Ladestationen sind in der Schrift DE 10 2009 026 936 A1 offenbart.

Hiervon ausgehend ist es Aufgabe der hier vorliegenden Erfindung ein Gerät zur Abgabe von elektrischer Energie, eine hiermit eingerichtete Ladestation für ein Kraftfahrzeug sowie ein Verfahren zum Laden eines Kraftfahrzeuges zu offenbaren. Das Abgabegerät, die Ladestation und das Verfahren lösen die beschriebenen Probleme zumindest teilweise bzw. lindern diese Probleme.

Diese Aufgaben werden gelöst mit einer Ladestation und einem Verfahren gemäß den unabhängigen Ansprüchen. Weitere bevorzugte Ausführungsbeispiele der Erfindung sind in den abhängig formulierten Ansprüchen beschrieben und werden in der Beschreibung im Detail noch weiter ausgeführt und ergänzt. Es ist darauf hinzuweisen, dass die abhängigen Ansprüche sowie die Beschreibung (und insbesondere die Figurenbeschreibung) nur bevorzugte Ausführungsbeispiele zeigen, auf welche die Erfindung nicht beschränkt ist.

Die Erfindung betrifft ein Gerät zur Abgabe von elektrischer Energie an einen elektrischen Speicher eines Fahrzeuges, aufweisend eine Kupplung zum Anschließen des Abgabegeräts an einen Adapterport einer Stromverteilerschiene, , einen Abgabeanschluss für eine Abgabeleitung zur Abgabe von elektrischer Energie an das Kraftfahrzeug, wobei die Kupplung und der Abgabeanschluss an oder in einem gemeinsamen Gehäuse angeordnet sind und wobei in dem Gehäuse ein Energiezähler und ein Steuergerät mit einer Netzwerkschnittstelle angeordnet sind, die dazu eingerichtet sind, die Energie zu zählen, die über den Abgabeanschluss an das Kraftfahrzeug abgegeben wird und Energieabgabedaten über die Netzwerkschnittstelle an ein Datenverarbeitungssystem zu kommunizieren.

Das Abgabegerät stellt einen ganz wesentlichen Teil der Ladeinfrastruktur zum Laden elektrisch betriebener Kraftfahrzeuge zum Einsatz in Elektromobilitätskonzepten dar. Das Abgabegerät vereint sämtliche Logik (insbesondere Schaltungstechnik), die an der Ladestation selbst bzw. in der Nähe des zu ladenden Kraftfahrzeuges vorhanden sein muss, um eine sichere, individuelle Abrechnung von Ladevorgängen zu ermöglichen. Dies schließt einerseits Komponenten ein, welche eine Identifikation desjenigen ermöglichen, welcher für den jeweiligen Ladevorgang verantwortlich ist (üblicherweise den Kraftfahrzeugbetreiber). Dies schließt andererseits Komponenten ein, welche eine genaue Erkennung der abgegebenen Energie ermöglichen. Dies schließt außerdem auch die Bereitstellung einer ausreichenden Manipulationssicherheit ein. Dies schließt (in bevorzugten Ausführungsvarianten) vor allem auch eine gezielte Möglichkeit der Aktivierung und der Deaktivierung der Abgabe von elektrischer Energie ein. Die beschriebenen Komponenten für die beschriebenen Funktionen umfassen insbesondere einen Energiezähler, welcher beispielsweise als Stromzähler ausgeführt sein kann. Bevorzugt ist dann die Abgabespannung, mit der das Abgabegerät den elektrischen Strom abgibt bzw. bereitstellt, entweder festgelegt oder diese Abgabespannung wird ebenfalls gemessen, um die tatsächlich abgegebene Menge an elektrischer Energie zu bestimmen. Die beschriebenen Komponenten umfassen weiter ein Steuergerät, welches die abgegebene elektrische Energie überwacht sowie eine Netzwerkschnittstelle, über welche dem Steuergerät Anweisungen gegeben werden können und über welche das Steuergerät Informationen über die Energieabgabe (Energieabgabedaten) an ein zentrales Datenverarbeitungssystem kommunizieren kann. Weitere Komponenten können in dem Abgabegerät realisiert sein. Sie sind allerdings zur Gewährleistung der Grundfunktion des Abgabegerätes in einer einfachsten Ausführungsform nicht unbedingt erforderlich. Mit den hier beschriebenen Komponenten lassen sich die beschriebenen Funktionen in einer minimalen Variante des beschriebenen Abgabegerätes bereits realisieren. Die weiteren für die Funktionalität notwendigen Komponenten können beispielsweise in dem (zentralen) Datenverarbeitungssystem realisiert sein.

Elektrische Energie wird in Form von elektrischem Strom zur Verfügung gestellt, welcher mit einer gewissen Spannung verfügbar ist. Die Abrechnung von der Nutzung eines beschriebenen Abgabegerätes erfolgt in üblichen Konzepten normalerweise in Bezug auf die tatsächlich abgegebene elektrische Energie. Es sind selbstverständlich auch andere Abrechnungsmodelle denkbar, in welchen beispielsweise eine zeitgesteuerte Abrechnung erfolgt, wo die Zeit abgerechnet wird, die ein Kraftfahrzeug an einer Ladestation mit einem beschriebenen Abgabegerät geladen wird. Letztlich ist jedoch die elektrische Energie die am meisten verbreitete Größe, anhand welcher eine Abrechnung der Nutzung einer Ladestation erfolgt.

Der elektrische Speicher, welcher mit dem beschriebenen Abgabegerät geladen werden kann, bzw. an welche mit dem beschriebenen Abgabegerät elektrische Energie abgegeben werden kann, ist üblicherweise ein Akkumulator. Die Bezeichnung des elektrischen Speichers als "elektrisch" ist nicht insofern beschränkt zu sehen, als dass die von dem Speicher aufgenommene elektrische Energie tatsächlich in elektrischer Form in dem Speicher noch existent sein muss. In einem Akkumulator (beispielsweise in einem weitverbreiteten Lithiumionenakkumulator oder einem Bleisäureakkumulator) liegt die elektrische Energie bei der Speicherung auch in chemischer Form und nicht in elektrischer Form selbst vor. Für die Klassifizierung des elektrischen Speichers als "elektrisch" ist vielmehr entscheidend, dass aus Sicht speicherexterner Komponenten der Speicher sich so verhält, als würde er elektrische Energie speichern. Beim Ladevorgang wird elektrische Energie in den Speicher hinein geliefert. Anschließend ist die Nutzung der gespeicherten elektrischen Energie möglich. Durch die Einlagerung von elektrischer Energie in den Speicher und die spätere Nutzung/Auslagerung dieser elektrischen Energie treten üblicherweise Verluste auf, welche jedoch der Definition des elektrischen Speichers hier nicht entgegenstehen. Selbstverständlich sind auch andere Arten der Energiespeicherung in einem elektrischen Speicher möglich. Beispielsweise in Form von Bewegungsenergie (Gyro-Speicher) oder in Form von direkter elektrischer Speicherung (in einem Kondensator) etc.

Das Fahrzeug ist insbesondere ein übliches Kraftfahrzeug und besonders bevorzugt ein Personenkraftfahrzeug (PKW). Das Abgabegerät ist allerdings auch für jede andere Art von Fahrzeug verwendbar, welche mit elektrischer Energie betrieben werden können (beispielsweise Boote, Flugzeuge, Lastkraftfahrzeuge etc.). Ein besonderer Fokus soll hier auch auf Zweiräder gelegt werden (beispielsweise Motorräder mit elektrischem Antrieb oder auch Fahrräder, Mofas etc.). Solche Zweiräder sind auch Fahrzeuge, für die die hier beschriebenen Abgabegeräte und damit eingerichtete Ladestationen verwendet werden können.

Wesentlich für das beschriebene Abgabegerät ist, dass dieses unmittelbar an einer Stromverteilerschiene angeordnet ist. Eine Stromverteilerschiene ist ein spezielles Bauteil zur Leitung von elektrischer Energie. Eine Stromverteilerschiene ist insbesondere abzugrenzen von einem Stromkabel. Eine Stromverteilerschiene ist steif konstruiert. D. h., dass Biegung und Verformungen einer Stromverteilerschiene zwar (aufgrund von außergewöhnlich hohen mechanischen Belastungen) auftreten können, jedoch für die Verwendung und insbesondere für die Montage und Einrichtung einer Stromverteilerschiene nicht vorgesehen sind. Stromverteilerschienen werden anders als Stromkabel nicht gezogen, sondern aus verschiedenen Stromverteilerschienenkomponenten zusammengesteckt, um eine elektrische Versorgung eines Verbrauchers (beispielsweise des beschriebenen Abgabegerätes) zu gewährleisten.

In einer Stromverteilerschiene liegen voneinander isoliert einzelne elektrische Leiter nebeneinander, die einzelne elektrische Pole bilden. Bevorzugt werden in Stromverteilerschienen plattenförmige elektrische Leiter verwendet. Zwischen derartigen plattenförmigen elektrischen Leitern liegen Isolationsschichten vor, die die einzelnen Leiter (die einzelnen Pole) gegeneinander isolieren. Für das beschriebene Abgabegerät bevorzugt sind Stromverteilerschienen, die zur Übertragung von Drehströmen (Dreiphasenwechselströmen) geeignet sind. Solche elektrischen Stromverteilerschienen haben mindestens drei Pole und in üblichen Ausführungsvarianten vier Pole, wobei drei dieser vier Pole zum Leiten der (Wechsel-)Phasen des elektrischen Stroms dienen und wobei ein vierter Pol die sogenannte Null bildet, über welche in einer netzseitigen Sternschaltung der elektrischen Leiter ein Ausgleichsstrom abgeführt werden kann. Üblicherweise hat eine solche Stromschiene als fünften Leiter eine Erdungsleitung. In Ausführungsvarianten von Stromschienen ist es möglich, dass die Erdungsleitung von einem metallischen Gehäuse der Stromverteilerschiene gebildet wird.

Die Stromverteilerschiene, für welche das Abgabegerät hier vorgesehen ist, ist bevorzugt zur Übertragung von sehr großen Mengen elektrischer Energie (bzw. elektrischer Leistung) geeignet. Bevorzugt ist, dass die Stromverteilerschiene für die Leitung von Stromstärken über 400 Ampere mit Spannungen im Niederspannungsbereich bis 1000 V geeignet ist. Problemlos realisierbar ist die Verwendung von Stromverteilerschienen mit übertragbaren Stromstärken von bis zu 6300 Ampere. Auch höhere Stromstärken sind denkbar. Mit solchen Stromschienen können elektrische Leistungen im Megawattbereich übertragen werden.

Eine Stromverteilerschiene ist (wie bereits beschrieben) üblicherweise aus einzelnen Stromverteilerschienenkomponenten zusammengesetzt. Einzelne Stromschienenkomponenten können beispielsweise Geradenstücke zur Überbrückung längerer Strecken, Winkelstücke zur Abwinkelung bzw. Richtungsänderung der Stromverteilerschiene oder Verbindungsstücke zum Verbinden mehrerer längerer Strecken sein.

Bevorzugt sind an einer solchen Stromverteilerschiene Adapterports vorgesehen. Solche Adapterports können an Enden von Stromverteilerschienenkomponenten im Bereich von Verbindungsstücken vorgesehen sein. Solche Adapterports können auch an längeren Stromverteilerschienenkomponenten in Bereichen zwischen den Enden vorgesehen sein. Solche Adapterports sind als seitlich zugängliche Zugangspunkte ausgeführt, an welchen auf die einzelnen Leiter (Pole) innerhalb der Stromverteilerschiene elektrisch leitend zugegriffen werden kann. Solche Zugangspunkte umfassen beispielsweise Unterbrechungen in einem Gehäuse einer Stromverteilerschiene, an welchen auf die Leiter (Pole) zugegriffen werden kann und welche beispielsweise durch Klappen verschlossen werden können, wenn an einen Adapterport kein Abgabegerät angeschlossen ist.

Das beschriebene Abgabegerät hat eine Kupplung, welche direkt an einen Adapterport einer Stromverteilerschiene angeschlossen werden kann. Die Kupplung ist an die Gestaltung von Adapterports an Stromverteilerschienen angepasst.

Das beschriebene Abgabegerät weist auch einen Abgabeanschluss für eine Abgabeleitung zur Abgabe von elektrischer Energie an das Fahrzeug auf. Üblicherweise ist es so, dass ein Fahrzeug relativ zu dem Abgabegerät nicht exakt positioniert ist, beispielsweise weil das Fahrzeug manuell in der Nähe des Abgabegerätes geparkt wurde. In dieser Konstellation ist auf dem (gedachten) letzten Meter von dem Abgabegerät bis zu einem entsprechenden Anschluss zum Anschließen einer Abgabeleitung an dem Kraftfahrzeug eine flexible Leitung erforderlich. Aus diesem Grund ist die Abgabeleitung zumindest abschnittsweise flexibel. Besonders bevorzugt ist die Abgabeleitung zumindest abschnittsweise als flexibles Kabel ausgeführt. Die Abgabeleitung ist damit klar abzugrenzen von der Stromverteilerschiene. Der Abgabeanschluss kann bevorzugt eine Steckdose für ein Ladekabel sein, wobei dieses Ladekabel die Abgabeleitung bildet und dieses Ladekabel beispielsweise von dem Inhaber/Betreiber des zu ladenden Fahrzeuges in den Abgabeanschluss eingesteckt werden kann. Der Abgabeanschluss kann auch ein Anschluss für eine zumindest abschnittsweise fest installierte Abgabeleitung sein, an welcher wiederum eine Steckdose (bzw. ein Verbindungsstecker) für ein Ladekabel angeschlossen sein kann, welches von dem Inhaber/Betreiber des Fahrzeuges dort eingesteckt werden kann. Diese Steckdose ist aber ein passives Bauteil, welches keinerlei Steuerungsfunktion, Schaltfunktion oder Kontrollfunktion hinsichtlich der Abgabe von elektrischer Energie hat.

Besonders bevorzugt existiert an dem Abgabeanschluss auch ein Verriegelungsmechanismus, mit welchem ein Stecker einer Abgabeleitung verriegelt und entriegelt werden kann. Der Verriegelungsmechanismus kann von einem Steuergerät des Abgabegeräts und/oder von einem Datenverarbeitungssystem, mit welchem das Abgabegerät kommuniziert, bevorzugt aktiv verriegelt und entriegelt werden. Besonders bevorzugt ist der Verriegelungsmechanismus dafür verwendbar, den Verbindungsstecker zu einer Abgabeleitung nach Verriegelung während des Ladens wieder zu entriegeln, damit dieser den Abgabeanschluss nach Beendigung des Energieabgabevorgangs nicht unnütz für einen unzumutbar langen Zeitraum blockiert.

Für das hier beschriebene Abgabegerät ist es wesentlich, dass netzseitig (auf der Seite von dem Abgabegerät auf welcher der Strom in das Abgabegerät hinein eintritt) die Energieversorgung des Abgabegerätes mit der starren Stromverteilerschiene erfolgt. Abgabeseitig (auf der Seite auf welcher das mit elektrische Energie zu versorgende Kraftfahrzeug an dem Abgabegerät angeordnet bzw. angeschlossen ist) erfolgt die Energieleitung üblicherweise auch mit einer (flexiblen) Leitung.

Durch die Ankopplung des Abgabegerätes an eine Stromverteilerschiene wird eine sehr kostengünstige, einfache und sichere Installation des Abgabegerätes möglich. Die Leitungsführung zur Bereitstellung von Ladestationen für elektrisch betriebene Fahrzeuge kann mit dem beschriebenen Abgabegerät erheblich vereinfacht werden. Ein weiterer wichtiger Aspekt ist, dass durch das (einfach mögliche) Vorinstallieren von Stromverteilerschienen die Möglichkeit geschaffen wird, später sehr einfach beschriebene Abgabegeräte zu installieren. Die Abgabegeräte müssen noch nicht installiert werden, wenn die Stromverteilerschiene bereits in die Nähe von Parkplätzen verlegt wird, die später als Ladestation für das elektrische Laden von Kraftfahrzeugen verwendet werden sollen. Dies lindert in sehr effizienter Weise das beschriebene Problem der Anfangsinvestition, welches sich bei der Bereitstellung von Ladeinfrastruktur regelmäßig ergibt.

Durch den direkten Anschluss des Abgabegerätes an die Stromverteilerschiene wird es darüber hinaus möglich, sehr große elektrische Leistungen zum schnellen Laden von Fahrzeugen bereitzustellen. Um derartige Leistungen mit einer klassischen Stromversorgung von Abgabegeräten über übliche flexible Leitungen zu gewährleisten, ist ein erheblicher Aufwand beim Ziehen dieser Leitungen notwendig. Dieser Aufwand kann durch das hier beschriebene Abgabegerät deutlich reduziert werden.

Das hier beschriebene Abgabegerät weist insbesondere auch ein Gehäuse auf. Hier klargestellt werden soll, dass sowohl die Kupplung zum Anschluss des Abgabegerätes an den Adapterport einer Stromverteilerschiene als auch der Abgabeanschluss zum Anschließen einer Abgabeleitung zu einem Kraftfahrzeug in bzw. an dem Gehäuse vorgesehen sind. Das Gehäuse soll einerseits vor Manipulation des Abgabegerätes sicher schützen. Das Gehäuse dient andererseits auch zum Schutz des Nutzers vor den starken Strömen, die in dem Abgabegerät bzw. in der Stromverteilerschiene fließen.

Die Kupplung weist mindestens zwei elektrisch voneinander getrennte Stromübertragungselemente auf, die dazu eingerichtet sind, in den Adapterport einzugreifen und elektrische Verbindungen zu Leitern in der Stromverteilerschiene herzustellen.

Im Bereich eines Adapterports an der Stromverteilerschiene existieren bevorzugt einzelne Öffnungen für jeden Leiter (Pol) in der Stromverteilerschiene. Durch diese Öffnung hindurch erstrecken sich die Stromübertragungselemente. Die Stromübertragungselemente können beispielsweise in Form von Blechen mit einem ausreichenden Querschnitt zur Übertragung der elektrischen Ströme ausgeführt sein, welche mit dem Abgabegerät zu Brennstoffen elektrischer Energie an ein Fahrzeug fließen.

Das Abgabegerät, weistmindestens eine Halteklammer auf, die dazu eingerichtet ist, eine mechanisch feste Verbindung zwischen der Stromverteilerschiene und dem Gehäuse zu bilden, wenn das Abgabegerät an den Adapterport der Stromschiene angeschlossen ist.

Eine Halteklammer kann an dafür vorgesehene Angriffspunkte der Stromverteilerschiene ansetzen, um das Gehäuse dort fest anzubinden. Durch die Anbindung des Gehäuses an eine Stromverteilerschiene wird das Abgabegerät selbst fest an die Stromverteilerschiene angebunden bzw. angeschlossen. Die Halteklammer kann einen Einrastmechanismus aufweisen, welcher an der Stromverteilerschiene bzw. an der Stromverteilerschiene zu diesem Zweck vorgesehenen Haltepunkten, einrastet. In einer bevorzugten Ausführungsform ist eine Halteklammer so ausgeführt, dass das Gehäuse bzw. das Abgabegerät an der Stromverteilerschiene eingehängt werden kann. Beispielsweise kann das Abgabegerät mit einer Halteklammer von oben an die Stromverteilerschiene angesetzt werden und dann durch eine Schwenkbewegung an die Stromverteilerschiene angelegt werden. Bei dieser Schwenkbewegung wird die Kupplung des Abgabegerätes in den Adapterport der Stromverteilerschiene eingesetzt bzw. mit dem Adapterport der Stromverteilerschiene in Verbindung gebracht.

Die mindestens eine Halteklammer weist mindestens einen Haken auf, welcher dazu eingerichtet ist in einen Hinterschnitt an der Stromverteilerschiene einzugreifen, um das Abgabegerät an der Stromverteilerschiene zu halten.

Besonders bevorzugt ist die Stromverteilerschiene in der Grundform eines Doppel-T-Trägers ausgeführt. Der Adapterport ist bevorzugt auf einem der beiden Endschenkel (Gurtes) dieses Doppel-Ts angeordnet. Die Leiter der Stromverteilerschiene sind im Steg dieses Doppel-T-Trägers angeordnet. Der Steg ist somit sehr viel breiter als bei üblichen mechanischen Doppel-T-Trägern. Eine solche Gestaltung der Stromverteilerschiene gibt der Stromverteilerschiene eine hohe mechanische Stabilität, was grundsätzlich wünschenswert ist. Durch diese Gestaltung existieren an den beiden Endschenkeln jeweils auch ein zum Steg hin ausgerichteter Hinterschnitt, welcher es ermöglicht, dass Haken von dem Abgabegerät umgreifen können, was eine sichere Anbindung des Adaptergerätes an die Stromverteilerschiene ermöglicht.

Das Abgabegerät weist einen Sicherheitsverschluss auf, mit welchem die mindestens eine Halteklammer sperrbar ist, um eine werkzeuglose Demontage des Abgabegerätes von der Stromverteilerschiene zu verhindern.

Der Sperrbereich des Sicherheitsverschlusses kann beispielsweise dadurch realisiert sein, dass der Sicherheitsverschluss eine Spezialverschraubung umfasst, welche nur mit einem speziellen Schraubendreher betätigt werden kann und welche dadurch gewährleistet, dass das Abgabegerät nur mit einem speziellen Werkzeug von der Stromverteilerschiene gelöst werden kann. Dann ist sichergestellt, dass kein Endbenutzer die Manipulation des Abgabegerätes in Erwägung zieht. Gleichzeitig ist für einen Nutzer, der das relevante Spezialwerkzeug verfügbar hat, eine sehr schnelle Montage und Demontage des Abgabegerätes möglich.

Außerdem vorteilhaft ist das Abgabegerät, wenn das Gehäuse zur ausschließlichen Befestigung an der Stromverteilerschiene ausgebildet ist.

Mit einer ausschließlichen Befestigung an der Stromverteilerschiene ist hier gemeint, dass das Abgabegerät bzw. das Gehäuse des Abgabegerätes keine weiteren Verbindungen zu anderen Komponenten hat, welche eine mechanische Haltefunktion ausführen. Verbindungen, die eine mechanische Haltefunktion ausführen, umfassen hier keine Verbindungen, welche durch eine flexible Abgangsleitung gebildet werden, welche von dem Abgabegerät abgeht und dann beispielsweise an einer Wand entlang geführt ist, um zu einer außerhalb des Abgabegerätes angeordneten Steckdose zu führen, an welcher beispielsweise ein Ladekabel eines Kraftfahrzeuges angeschlossen werden kann. Besonders bevorzugt ist allerdings, dass auch solche Verbindungen nicht existieren, sondern die Ladestation dann, wenn kein Ladekabel (keine Abgabeleitung) an den Abgabeanschluss angeschlossen ist, tatsächlich nur mit der Stromverteilerschiene verbunden ist. Dann kann das Abgabegerät besonders einfach montiert und demontiert werden.

Wenn eine Vielzahl von Adapterports an einer Stromverteilerschiene vorhanden sind, allerdings nur weniger Abgabegeräte verfügbar sind als Adapterports, dann kann ein Anwender (beispielsweise ein Betreiber der Ladestation, beispielsweise ein Parkhausbetreiber) Abgabegeräte beispielsweise sehr schnell an andere Adapterports anschließen. So kann häufig ein Umparken von Kraftfahrzeugen vermieden werden, um ein Kraftfahrzeug zu einer Ladestation zu bewegen. Vielmehr ist es so möglich, dass die Ladestation sich zu dem Kraftfahrzeug hinbewegt.

Darüber hinaus vorteilhaft ist das Abgabegerät, wenn die Netzwerkschnittstelle dazu eingerichtet ist, Daten über mindestens ein Stromübertragungselement zu versenden.

Eine solche Netzwerkkommunikation kann beispielsweise mit Bauteilen erfolgen, welche die Leitung von Netzwerkkommunikation über Stromnetze ermöglichen. Bevorzugt erfolgt die Datenübertragung über zwei Leiter, nämlich über Phase in der Stromverteilerschiene und einem weiteren vorhandenen Leiter der Stromverteilerscheine (weitere Phase oder Nullleiter).

Solche Bauteile sind beispielsweise für den Heim-Netzanwender-Betrieb bekannt. Durch solche Netzwerkkommunikation über die Stromübertragungselemente wird es möglich, auf eine zusätzliche Verkabelung zur Netzwerkkommunikation (beispielsweise CAT-Kabel, die parallel zu der Stromverteilerschiene verlaufen) zu verzichten. Insbesondere wird es möglich auch auf eine drahtlose Netzwerkkommunikation von dem Abgabegerät zu weiteren Komponenten (beispielsweise zu einem Router zur Verbindung ins Internet) zu verzichten. Dies erhöht grundsätzlich die Manipulationssicherheit der Netzwerkkommunikation mit dem beschriebenen Abgabegerät.

Natürlich ist es im beschriebenen Abgabegerät auch möglich, alternative Netzwerkschnittstellen vorzusehen, wie beispielsweise die bereits angedeutete drahtlose Netzwerkkommunikationsschnittstelle (beispielsweise über WLAN) oder aber auch die Netzwerkkommunikation über ein zusätzliches parallel zu der Stromverteilerschiene geführtes Netzwerkkabel, wobei hier mit dem Begriff weniger eine räumliche parallele Anordnung als vielmehr ein parallele Anordnung in dem Sinne, dass sämtliche Abgabegeräte sowohl von der Stromverteilerschiene mit elektrische Energie als auch dann über das Netzwerkkabel oder über mehrere (verschiedene) Netzwerkkabel an ein Netzwerk (insbesondere mittelbar auch an das Internet) angeschlossen sind.

In weiteren Ausführungsvarianten ist es auch möglich, dass in der Stromverteilerschiene ein (separates) Datenkabel für die Netzwerkkommunikation des Abgabegeräts mit einem Datenverarbeitungssystem vorgesehen ist. Bevorzugt sind die Kupplung an dem Abgabegerät und der Adapterport an der Stromverteilerschiene dann auch so ausgeführt, dass beim Ankuppeln des Abgabegeräts an die Stromverteilerschiene (automatisch) auch eine datenleitende Verbindung zwischen dem Abgabegerät und dem Datenkabel in der Stromverteilerschiene ausgebildet wird. In Ausführungsvarianten ist es auch möglich, dass eine solche Verbindung manuell hergestellt werden muss, beispielsweise in dem das Abgabegerät einen Netzwerkstecker aufweist, welcher in eine Netzwerksteckdose an dem Adapterport der Stromverteilerschiene eingesetzt werden kann. Bevorzugt wird hiermit eine Netzwerkverbindung hergestellt und anschließend wird das Abgabegerät an den Adapterport angekuppelt. Dabei verdeckt das Abgabegerät bevorzugt die Netzwerkverbindung, um diese Netzwerkverbindung vor Manipulation zu schützen. Alternativ ist es auch möglich, dass die Netzwerksteckdose an dem Abgabegerät angeordnet ist und ein Netzwerkstecker an dem Adapterport der Stromverteilerschiene existiert.

Auch vorteilhaft ist das Abgabegerät, wenn es mindestens einen elektrischen Schalter zur Steuerung der Abgabe von elektrischer Energie an dem Abgabeanschluss aufweist.

Ein solcher Schalter ist bevorzugt in Form eines Relais, insbesondere eines Hochleistungsrelais ausgeführt. Ein solcher Schalter ermöglicht es, die Bereitstellung von elektrischer Energie an dem Abgabeanschluss gezielt zu aktivieren und zu deaktivieren.

Weiterhin vorteilhaft ist das Abgabegerät, wenn das Steuergerät dazu eingerichtet ist, den elektrischen Schalter in Abhängigkeit von Steuerdaten zu steuern, die das Steuergerät über die Netzwerkschnittstelle empfängt.

Steuerdaten sind beispielsweise Daten, welche ein Aktivieren eines elektrischen Schalters zur Bereitstellung von elektrischer Energie an einem Abgabeanschluss auslösen oder Daten, die ein Deaktivieren eines elektrischen Schalters zur Beendigung der Bereitstellung von elektrischer Energie an einem Abgabeanschluss auslösen.

Steuerdaten können insbesondere auch Daten sein, welche eine Reservierung der Ladestation bewirken. Mithilfe von Steuerdaten kann beispielsweise verhindert werden, dass die Ladestation durch weitere Benutzer (andere Benutzer als denjenigen Benutzer, welche die Ladestation reserviert hat) in Beschlag genommen bzw. blockiert wird.

Darüber hinaus vorteilhaft ist das Abgabegerät, wenn es eine Anzeigeeinrichtung zur visuellen und/oder akustischen Anzeige von Informationen für einen Benutzer des Abgabegeräts aufweist.

Eine Anzeigeeinrichtung ist besonders bevorzugt ein Display, an welchem dem Benutzer Informationen über den Ladestatus (Energie wird bereitgestellt oder bei Energie wird nicht bereitgestellt) angezeigt werden. Über ein solches Display ist es auch möglich, weitere Informationen bereitzustellen, beispielsweise Informationen über die Menge an abgegebener elektrischer Energie, Laderestdauer, Informationen über sich anschließende Reservierungen der Ladestation usw.

Die Anzeigeeinrichtung kann allerdings auch einfacher ausgeführt sein, beispielsweise in Form einer Leuchte oder einer Blinkerleuchte, welche Beispielsweise rot leuchtet, wenn das Abgabegerät reserviert ist, blau wenn das Abgabegerät verfügbar ist und grün wenn das Abgabegerät gerade für einen Ladevorgang verwendet wird. Kombinationen verschiedener Konzepte von Anzeigevorrichtungen sind möglich.

Hier soll noch kurz eine weitere besondere Ausführungsvariante des beschriebenen Abgabegerätes beschrieben werden. Bevorzugt ist auch, wenn das Abgabegerät zum gleichzeitigen Laden von mehreren Fahrzeugen vorgesehen ist. Bevorzugt hat das Abgabegerät dafür mehrere Abgabeanschlüsse, beispielsweise zwei Abgabeanschlüsse. Solche Abgabegeräte können beispielsweise so angeordnet werden, dass diese von zwei direkt zueinander benachbarten Parkplätzen aus erreichbar sind. Besonders bevorzugt haben solche Abgabegeräte aber nur eine Kupplung zum Ankuppeln an eine Stromverteilerschiene und auch nur ein Gehäuse. Der sonstige Aufbau des Abgabegeräts ist aber doppelt ausgelegt, so dass das Abgabegerät letztlich für jeden der zu versorgenden Parkplätze bzw. für jedes Fahrzeug auf einem dieser Parkplätze getrennt betrieben werden kann. Solche Abgabegeräte sind beispielsweise für die Bereitstellung elektrischer Energie für Zweiräder besonders bevorzugt, weil Zweiräder normalerweise nicht so viel Platz einnehmen, dass lange Abgabeleitungen notwendig würden, wenn mehrere Zweiräder mit nur einem Abgabegerät geladen werden.

Hier soll auch eine Ladestation zum Aufladen eines elektrischen Speichers in einem Kraftfahrzeug, aufweisend ein beschriebenes Gerät zur Abgabe von elektrischer Energie, beschrieben werden.

Die Ladestation kann ein beliebiger Parkplatz für ein Fahrzeug, insbesondere für ein Kraftfahrzeug sein. Besonders bevorzugt ist die Ladestation in einem Parkhaus angeordnet. In einem Parkhaus können mit Hilfe der Stromverteilerschienen Vorausrüstungen zur Anbringung von beschriebenen Abgabegeräten ohne großen Aufwand und vor allem mit niedrigen Kosten realisiert sein. Anschließend ist es mit geringem Aufwand möglich, zusätzliche Parkplätze mit Ladestationen für elektrisch beschriebene Kraftfahrzeuge auch nachträglich zu realisieren.

Die für das beschriebene Abgabegerät geschilderten besonderen Vorteile und Ausgestaltungsmerkmale sind in analoger Weise auf beschriebene Ladestationen anwendbar und übertragbar. Gleiches gilt für die im Folgenden beschriebenen besonderen Vorteile und Ausstattungsmerkmale der Ladestation, die auf das Abgabegerät anwendbar und übertragbar sind.

In einer besonders bevorzugten Ausführungsvariante der Ladestation in einem Parkhaus ist die Stromverteilerschiene zum Anschließen des Abgabegerätes so angeordnet, dass eine direkt an dem Abgabegerät angeordnete Steckdose sowie eine gegebenenfalls an dem Abgabegerät angeordnete Anzeigevorrichtung (beispielsweise ein Display) für einen Benutzer direkt im Blickfeld liegen. Dies ist beispielsweise realisiert, wenn die Stromverteilerschiene und damit auch die Abgabegeräte in einer Höhe von ungefähr 1,30 m an einer Abschlusswand (oder Rückwand) am Ende einer Reihe von Parkplätzen angeordnet ist.

In einer weiteren bevorzugten Ausführungsvariante von Ladestationen in einem Parkhaus ist eine Stromverteilerschiene knapp unter einer Parkhausdecke in einer Höhe von beispielsweise 2 m über dem Boden eines Parkhausdecks angeordnet. Es ist möglich dann beispielsweise eine frei hängende Abgabeleitung auszuführen, an welcher ein Fahrzeug angeschlossen werden kann, welche dauerhaft an dem Abgabegerät angeschlossen ist. Auch möglich ist es eine dauerhafte Leitung von dem Abgabegerät weg zu einer externen Steckdose (einem externen Verbindungsstecker) zu führen. Eine solche externe Steckdose kann dann in einer geeigneten Höhe angeordnet sein, damit an diese Steckdose das Kraftfahrzeug angeschlossen werden kann.

In weiteren Ausführungsvarianten ist es auch möglich, dass die Stromverteilerschiene nicht an einer Wand (Abschlusswand oder Rückwand) am Ende von Parkplätzen angeordnet ist, sondern in der Mitte zwischen zwei Reihen von Parkplätzen. In einer solchen Anordnung sind bevorzugt zwei Reihen von Parkplätzen direkt aneinander angrenzend angeordnet Diese Parkplätze in diesen beiden Reihen sind dann bevorzugt über separate Fahrbahnen erreichbar. Dort wo die Reihen von Parkplätzen aneinandergrenzen, verläuft die Stromverteilerschiene. Die Parkplätze der beiden Reihen grenzen bevorzugt stirnseitig aneinander. Die Stromverteilerschiene ist dann bevorzugt dazu eingerichtet, Parkplätze in beiden Reihen bzw. Abgabegeräte für Parkplätze in beiden Reihen zu versorgen. Diese Stromverteilerschiene ist also eine "gemeinsame" Stromverteilerschiene für zwei Reihen von Parkplätzen.

Besonders bevorzugt ist die Ausführungsvariante mit einer gemeinsamen Stromverteilerschiene für zwei Reihen von Parkplätzen in Kombination mit einer knapp unter einer Parkhausdecke angeordneten Stromverteilerschiene. Externe Steckdosen, die mit dauerhaften Leitungen an Abgabegeräte angeschlossen sind, befinden sich dann bevorzugt an Stützsäulen der Parkhausdecke, welche bevorzugt in regelmäßigen Abständen auf der Grenze zwischen den beiden Parkplatzreihen angeordnet sind. Dort sind die externen Steckdosen für einen Benutzer gut erreichbar. Gleichzeitig ist der für die Abgabegeräte, die Stromverteilerschiene und die externen Steckdosen benötigte Platz gering.

In weiteren bevorzugten Ausführungsvarianten ist die beschriebene Ladestation an temporären Parkplätzen vorgesehen. Mit der beschriebenen Ladestation bzw. mit dem beschriebenen Abgabegerät und der Versorgung des beschriebenen Abgabegerätes über Stromverteilerschienen, ist es (sehr einfach) möglich, auch für temporäre Parkplätze, beispielsweise bei Großveranstaltungen elektrische Lademöglichkeiten für Kraftfahrzeuge bereitzustellen und wieder zu demontieren.

Außerdem soll hier ein Verfahren zum Laden eines Fahrzeugs beschrieben werden, wobei dieses Verfahren die folgenden Schritte aufweist:
a) Aktivieren eines Abgabegerätes zur Abgabe von elektrischer Energie mit einem mobilen Endgerät, wobei mit dem mobilen Endgerät eine Aktivierungsanfrage an ein Datenverarbeitungssystem übermittelt wird, und das Datenverarbeitungssystem eine Aktivierung des Abgabegerätes auslöst, wenn die Aktivierungsanfrage erfolgreich war.
b) Bereitstellen von elektrischer Energie an das Abgabegerät über eine Stromverteilerschiene, und
c) Abgabe von elektrischer Energie von dem Abgabegerät an das Fahrzeug.

Die für das beschriebene Abgabegerät und die beschriebene Ladestation geschilderten besonderen Vorteile und Ausgestaltungsmerkmale sind in analoger Weise auf das beschriebene Verfahren anwendbar und übertragbar. Gleiches gilt für die im Folgenden beschriebenen besonderen vorteilhaften Ausstattungsmerkmale des beschriebenen Verfahrens, welche in analoger Weise auf das Abgabegerät und die Ladestation übertragbar sind.

Das zentrale Datenverarbeitungssystem für das beschriebene Verfahren ist bevorzugt ein zentraler Server, welcher beispielsweise über das Internet an die Abgabegeräte angeschlossen ist und auf welchem eine Software betrieben wird, welche eine Verwaltung der Ladestation ermöglicht. Ein Zugriff auf diesen zentralen Server kann beispielsweise mit mobilen Endgeräten erfolgen, wobei ein Benutzer, welcher eine Ladestation nutzen will, einen Account auf dem Server nutzt, mit welchem er die Ladestation spontan buchen bzw. reservieren kann. An den Account geknüpft sind dann üblicherweise auch Informationen, welche eine Abrechnung der durchgeführten Ladevorgänge gegenüber dem Betreiber des Abgabegerätes ermöglichen.

Das Aktivieren des Geräts (Schritt a) zur Abgabe von elektrischer Energie kann insbesondere auch im Zusammenhang mit einer Reservierung des Abgabegerätes erfolgen, wobei diese Reservierung beispielsweise noch deutlich vor dem Start des Ladevorgangs ausgeführt wird. So kann man eine Ladestation mit einem beschriebenen Abgabegerät beispielsweise reservieren, bevor man an den Ort des Abgabegerätes tatsächlich gelangt.

Die für die Bereitstellung der elektrischen Energie (Schritt b) verwendete Stromverteilerschiene ermöglicht eine effiziente Versorgung des Abgabegerätes mit großen Mengen elektrischer Energie. Dies ermöglicht auch die Abgabe großer Mengen von elektrischer Energie an dem Abgabeanschluss, so dass mit dem beschriebenen Verfahren insbesondere auch ein effizientes Schnellladen von elektrisch betreibbaren Kraftfahrzeugen möglich ist.

Darüber hinaus soll hier die Verwendung einer Stromverteilerschiene zur Versorgung einer Mehrzahl von Abgabegeräten zur Abgabe von elektrischer Energie an elektrische Speicher von Kraftfahrzeugen vorgeschlagen werden, wobei die Abgabegeräte unmittelbar an die Stromverteilerschiene angeschlossen sind.

Die für das beschriebene Abgabegerät, die beschriebene Ladestation und das beschriebene Verfahren geschilderten besonderen Vorteile und Ausgestaltungsmerkmale sind in analoger Weise auf die beschriebene Verwendung einer Stromverteilerschiene anwendbar und übertragbar. Gleiches gilt für die im Folgenden im Zusammenhang mit der beschriebenen Stromverteilerschiene beschriebenen besonderen Vorteile und Ausstattungsmerkmale, die in analoger Weise auf das Abgabegerät, die Ladestation und das beschriebene Verfahren anwendbar und übertragbar sind.

In Zusammenhang mit der Verwendung von Stromverteilerschienen zur Versorgung einer Mehrzahl von Abgabegeräte ist insbesondere die weiter oben bereits angedeutete sehr kosteneffiziente Versorgung von Abgabegeräten für Ladestationen zum Laden elektrisch betriebener Kraftfahrzeuge möglich.

Einen besonderer Fokus ist hierbei darauf zu legen, dass die Abgabegeräte unmittelbar an der Stromverteilerschiene angeordnet bzw. angeschlossen sind bzw. die Stromverteilerschiene damit die Abgabegeräte unmittelbar mit elektrischer Energie versorgt. Dies bedeutet insbesondere, dass keine andere elektrische Leitung zwischen den Abgabegeräten und der Stromverteilerschiene angeordnet ist, insbesondere kein flexibles Kabel.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf welche die Erfindung jedoch nicht beschränkt ist. Es ist insbesondere darauf hinzuweisen, dass die Figuren nur schematisch sind. Dies gilt vor allem für die in den Figuren dargestellten Größenverhältnisse. Es zeigen:
- Fig. 1:: ein beschriebenes Abgabegerät an einer Stromverteilerschiene;
- Fig. 2:: die Stromverteilerschiene aus Fig. 1 ohne das beschriebene Abgabegerät;
- Fig. 3:: ein beschriebenes Abgabegerät in einer rückseitigen Ansicht;
- Fig. 4:: eine schematische Darstellung des Innenraums des beschriebenen Abgabegerätes;
- Fig. 5:: ein erstes Beispiel für die Ausgestaltung von Ladestationen mit beschriebenen Abgabegeräten;
- Fig. 6:: ein zweites Beispiel für die Ausgestaltung von Ladestationen für elektrisch betriebene Kraftfahrzeuge mit beschriebenen Abgabegeräten;
- Fig. 7:: eine Übersicht der Datenkommunikation bei der Verwendung eines beschriebenen Abgabegerätes;
- Fig. 8:: eine alternative Ausführungsvariante einer Stromverteilerschiene; und
- Fig. 9:: eine weitere alternative Ausführungsvariante einer Stromverteilerschiene.

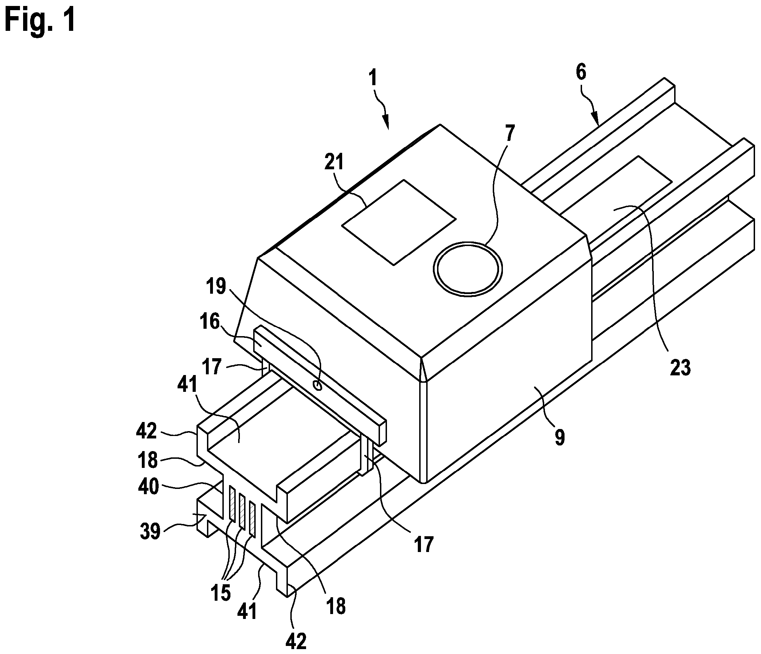

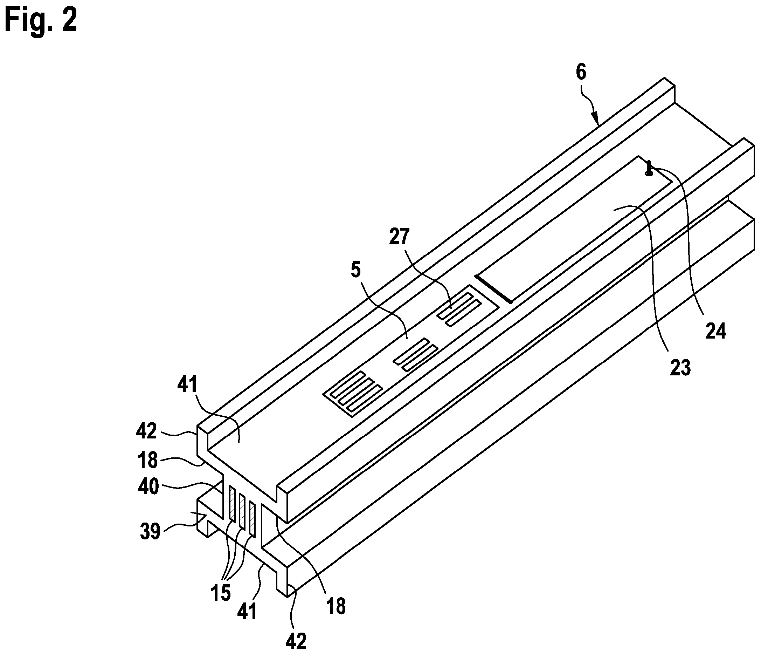

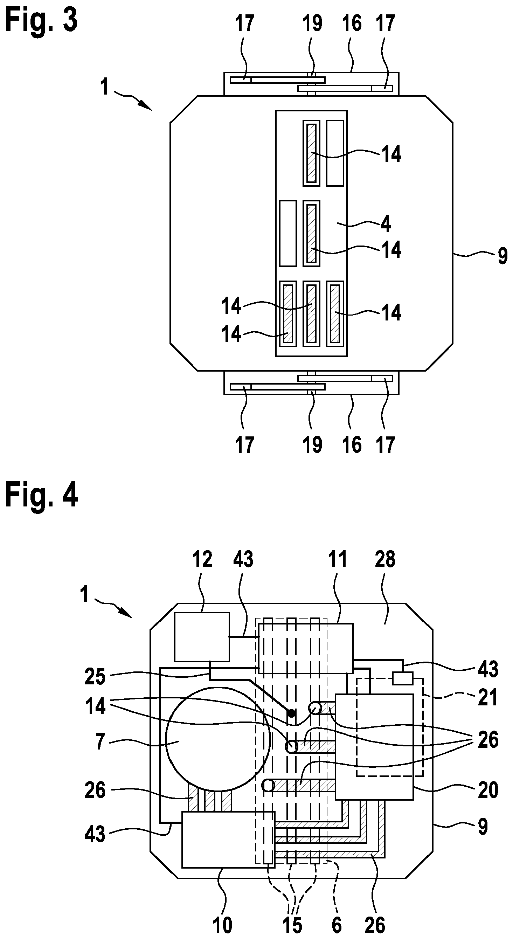

Die Fig. 1 und die Fig. 2 zeigen jeweils eine Stromverteilerschiene 6. Die Stromverteilerschiene hat von außen betrachtet eine Doppel-T-Träger förmige Querschnittsfläche 39 mit einem Steg 40 und zwei Gurtabschnitten 41, die jeweils an die Enden des Steg 40 anschließen. In dem Steg 40 befinden sich elektrische Leiter 15 der Stromverteilerschiene 6. Die elektrischen Leiter 15 sind mit einer (hier nicht gesondert dargestellten) elektrischen Isolierung gegeneinander und gegen ein (hier nicht gesondert dargestelltes) Gehäuse der Stromverteilerschiene 6 isoliert. Die hier (gemäß den Fig. 1 und Fig. 2) dargestellte Stromverteilerschiene 6 weist vier elektrische Leiter 15 auf. Drei dieser elektrischen Leiter 15 werden bevorzugt zur Übertragung eines Dreiphasen-Wechselstromes verwendet. Der vierte dieser elektrischen Leiter 15 dient als Nullleiter. Das (hier nicht gesondert dargestellte) Gehäuse der Stromverteilerschiene 6 dient als Erdungsleiter. In Fig. 2 ist der Adapterport 5 an der Stromverteilerschiene 6 sichtbar. Der Adapterport 5 ist an einem der Gurtabschnitte 41 angeordnet und durch die hervorstehenden Flansch 42 an dem Gurtabschnitt 41 mechanisch geschützt. Dieser Adapterport 5 dient zum Anschluss eines Abgabegerätes 1, welches in der Darstellung gemäß Fig. 1 auf den Adapterport 5 der Stromverteilerschiene 6 aufgesetzt ist. An den Adapterport 5 kann eine (in Fig. 3 dargestellte Kupplung 4 des Adaptergerätes 1 angeschlossen werden. Der Adapterport 5 hat Steckeraufnahmen 27, in welche (in Fig. 3 dargestellte Stromübertragungselemente 14) die Kupplung 4 des Abgabegerätes 1 eingreifen kann, um eine Stromübertragung von den Leitern 15 der Stromverteilerschiene 6 zu dem Abgabegerät 1 zu ermöglichen. Der Adapterport 5 hat einen Deckel 23 mit dem der Adapterport 5 verschlossen werden kann, damit der Adapterport 5 geschützt ist, wenn kein Abgabegerät 1 auf den Adapterport 5 aufgesetzt ist. Der Deckel 23 kann bevorzugt mit einem Riegel 24 verschlossen werden, der bevorzugt nur mit einem Schlüssel oder einem Werkzeug geöffnet werden kann.

Das in der Fig. 1 dargestellt Abgabegerät 1 hat ein Gehäuse 9 und es kann mit Halteklammern 16 an der Stromverteilerschiene 6 befestigt werden, wenn die (in Fig. 3 näher dargestellte) Kupplung des Abgabegerätes 1 auf den Adapterport 5 der Stromverteilerschiene 6 aufgesetzt ist. Die Halteklammern 16 weisen jeweils Haken 17 auf, die in Hinterschnitte 18 eingreifen, die von dem Gurtabschnitten 41 der Stromverteilerschiene 6 gebildet werden. Die Halteklammern 16 sind bevorzugt mit einem Sicherheitsverschluss 19 verriegelbar. Der Sicherheitsverschluss 19 ist bevorzugt nur mit einem Spezialwerkzeug oder einem Schlüssel lösbar. In der Fig. 1 ist außerdem erkennbar, dass das Abgabegerät 1 einen Abgabeanschluss 7 zum Anschluss einer (hier nicht dargestellten) Abgabeleitung 8 aufweist, über welche elektrische Energie für ein Fahrzeug bereit gestellt werden kann. Außerdem dargestellt ist eine (hier als Display ausgeführte) Anzeigeeinrichtung 21 mit welcher einem Benutzer des Abgabegerätes 1 Informationen bereitgestellt werden können.

Die Fig. 3 zeigt eine rückseitige Ansicht des Abgabegerätes 1. Hier ist die Kupplung 4 an dem Gehäuse 9 des Abgabegerätes 1 zu erkennen, welche in Fig. 1 nicht zu sehen ist, weil diese Kupplung 4 sich in Fig. 1 auf der zur Stromverteilerschiene hin ausgerichteten Seite des Abgabegerätes 9 befindet. Zu erkennen ist, dass die Kupplung 4 Stromübertragungselemente 14 aufweist, die in Steckeraufnahmen des Adapterports an der Stromverteilerschiene (siehe Fig. 2) eingreifen können. In Fig. 3 auch zu erkennen sind die Halteklammern 16, welche jeweils seitlich an dem Gehäuse 9 des Abgabegerätes 1 angeordnet sind und welche Haken 17 und einen Sicherheitsverschluss 19 aufweisen. Der Hacken 17 und der Sicherheitsverschluss 19 sind vorstehend im Zusammenhang mit der Fig. 1 bereits erläutert.

Fig. 4 zeigt einen Gehäuseinnenraum 28 des Gehäuses 9 des Abgabegerätes 1. In dem Gehäuseinnenraum 28 ist im Hintergrund gestrichelt, schematisch die Stromverteilerschiene 6 mit ihren Leitern 15 dargestellt. Zu erkennen sind Hochleistungsleiter 26 in dem Gehäuse 9, die von Stromübertragungselementen 14, die in Kontakt mit den Leitern 15 stehen, hin zu dem Abgabeanschluss 7 verlaufen. In dem Gehäuse 9 befindet sich ein elektrischer Schalter 20, mit welchem eine Bereitstellung von elektrischer Energie an dem Abgabeanschluss 7 aktiviert und deaktiviert werden kann. In dem Gehäuse 9 befindet sich auch ein Energiezähler 10 mit welchem elektrische Energie gezählt werden kann, die an dem Abgabeanschluss 7 abgegeben wird. Außerdem ist in dem Gehäuse 9 auch ein Steuergerät 11 angeordnet, welches das Abgabegerät 1 steuert. Das Steuergerät 11 ist dafür über interne Datenleitungen 43 mit den weiteren Komponenten in dem Gehäuse 9 des Abgabegerätes 1 verbunden, nämlich insbesondere mit dem elektrischen Schalter 20 und dem Energiezähler 10. Das Steuergerät 11 ist darüber hinaus mit einer Netzwerkschnittstelle 12 verbunden, die einen Netzwerkanschluss 26 aufweist, der über die Stromübertragungselemente 14 bzw. über die Leiter 15 der Stromverteilerschiene 6 eine datenleitende Verbindung zu einer externen, zentralen Datenverarbeitung (beispielsweise einem zentralen Steuerungsserver für eine Vielzahl von derartigen Abgabegeräten) aufweist.

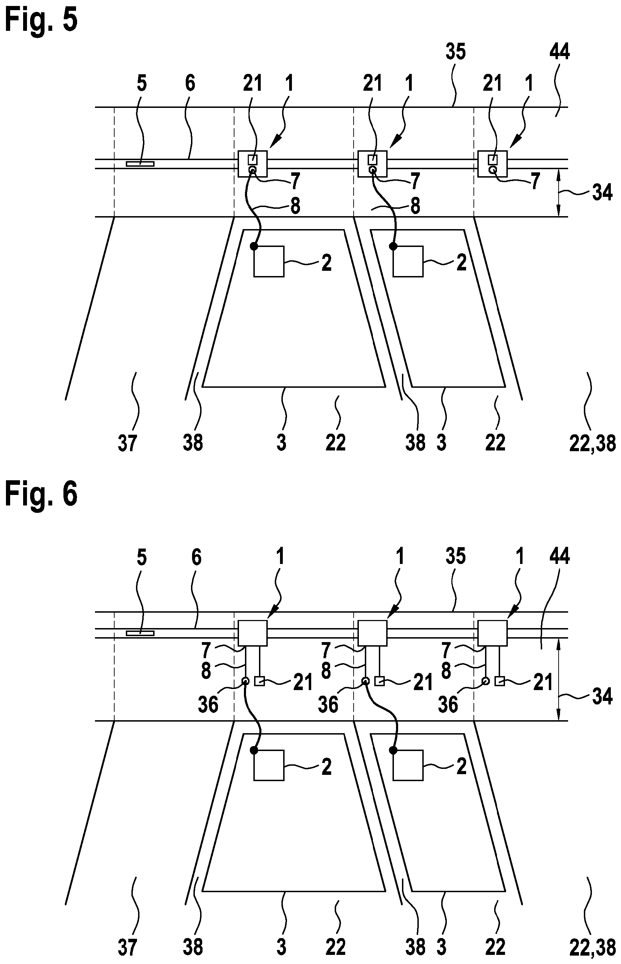

Die Fig. 5 und die Fig. 6 zeigen jeweils Beispiele von Ausgestaltungen von Ladestationen 22 mit beschriebenen Abgabegeräten 1. In beiden Figuren sind Ladestationen 22 auf Parkplätzen in einem Parkhaus gezeigt, wobei jeweils mit Abgabegeräten 1 ausgestattete elektrifizierte Parkplätze 38 (die auch als Ladestationen 22 bezeichnet werden können) und konventionelle Parkplätze 37 existieren. Auf den elektrifizierten Parkplätzen 38 bzw. den Ladestationen 22 stehen jeweils Kraftfahrzeuge 3 mit elektrischen Speichern 2, die über Abgabeleitungen 8 an Abgabeanschlüsse 7 von den Abgabegeräten 1 angeschlossen sind. Die Abgabegeräte 1 sind jeweils am Ende der Parkplätze an einer Rückwand 44 des Parkhauses angeordnet. Zur Versorgung der Abgabegeräte 1 mit elektrischer Energie verläuft entlang der Parkplätze auf der Rückwand 44 eine Stromverteilerschiene 6. Die Abgabegeräte sind an Adapterports 5 der Stromverteilerschiene 6 angeschossen. Sowohl in Fig. 5 als auch in Fig. 6 ist jeweils ein Adapterport 5 gezeigt an den kein Abgabegerät 1 angeschlossen ist. Hier existiert jeweils ein konventioneller Parkplatz 37 auf welchem ein elektrisch betriebenes Kraftfahrzeug 2 nicht geladen werden kann. Durch die Installation eines Abgabegerätes 1 auf diesem Adapterport 5 kann dieser konventionelle Parkplatz 37 aber sehr schnell zu einem elektrifizierten Parkplatz 38 bzw. zu einer Ladestation 22 nachgerüstet oder umgerüstet werden.

Bei der Ausführungsvariante gemäß Fig. 5 sind die Stromverteilerschiene 6 und die Abgabegeräte 1 in einer Höhe installiert, so dass ein Benutzer den Abgabeanschluss 7 an dem Abgabeberät 1 gut erreichen kann und eine Anzeigeeinrichtung 21 an dem Abgabegerät 1 auch gut ablesen kann. Dies wird durch eine Schienenhöhe 34 der Stromverteilerschiene 6 zwischen 0,80 m und 1,40 m über dem Boden der Parkplätze erreicht.

Bei der Ausführungsvariante gemäß Fig. 6 sind die Stromverteilerschiene 6 und die Abgabegeräte 1 in einer Höhe installiert, bei welcher ein Benutzer den Abgabeanschluss 7 an dem Abgabegerät 1 nicht mehr gut erreichen kann. Die Schienenhöhe 34 der Stromverteilerschiene 6 entspricht hier beispielsweise mehr als 1,80 m über dem Boden der Parkplätze. Besonders bevorzugt ist die Stromverteilerschiene 6 knapp unter der Parkhausdecke 34 (weniger 0,30 m unter der Parkhausdecke 34 oder sogar weniger als 0,20 m unter der Parkhausdecke 34) angeordnet. Bei dieser Ausführungsvariante ist nicht nur der Abgabeanschluss 7 an dem Abgabegerät 1 für einen Benutzer nicht gut erreichbar. Auch eine Anzeigeeinrichtung 21 direkt an dem Gehäuse des Abgabegerätes 1 wäre hier für einen Benutzer nicht gut ablesbar. Aus diesem Grund ist die Abgabeleitung 8 von dem Abgabeanschluss 7 hier zunächst bis zu einem (externen) Verbindungsstecker 36 geführt, an welchen ein weiterer Abschnitt der Abgabeleitung 8 anschließbar ist. Dies kann ein Benutzer dann problemlos tun. Der Verbindungsstecker 36 ist bevorzugt an der Rückwand 44 der Parkplätze fest installiert. An der Rückwand 44 ist in einer für einen Benutzer gut lesbaren Höhe bevorzugt auch eine Anzeigeeinrichtung 21 angeordnet, so dass ein Benutzer diese gut ablesen kann.

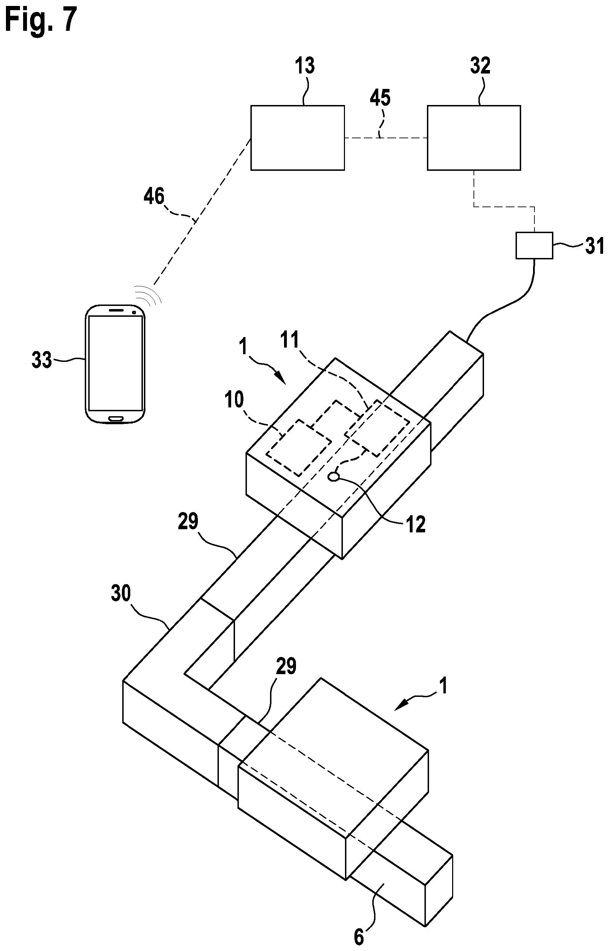

Fig. 7 zeigt in einer schematischen Darstellung verschiedene Details eines Systems rund um das beschriebene Abgabegerät 1, wobei ein Schwerpunkt auf die Datenkommunikation der verschiedenen Komponenten miteinander gelegt ist. Zu erkennen sind zwei Abgabegeräte 1 die an der Stromverteilerschiene 6 angeschlossen sind. Dargestellt ist, dass die Stromverteilerschiene 6 aus verschiedenen Stücken zusammengesetzt sein kann. Beispielhaft gezeigt sind hier Geradenstücke 29 sowie ein Winkelstück 30. Es können viele verschiedene weitere Typen von Stromverteilerschienenstücken existieren mit welchen ein elektrisches Versorgungssystem auf Stromverteilerschienenbasis problemlos an die jeweils vorliegenden räumlichen Gegebenheiten angepasst werden kann. Bei dem oberen Abgabegerät 1 in Fig. 7 ist schematisch auch das Innenleben bestehend aus Steuergerät, Energiezähler und Netzwerkschnittstelle 12 dargestellt, wobei diese Komponenten hier nur beispielhaft dargestellt sind. Es können viele weitere Komponenten in dem Abgabegerät 1 vorhanden sein, die weiter vorstehend (beispielsweise in Zusammenhang mit Fig. 4) auch detailliert erläutert sind. Besonders hingewiesen werden soll hier auf die Netzwerkschnittstelle 12 in dem Abgabegerät 1, die es ermöglicht, dass das Steuergerät 11 über die Netzwerkschnittstelle, die Stromverteilerschiene 6, einen weiteren Netzwerkadapter 31, einen Router 32 und eine Internetverbindung 45 mit einer zentralen Datenverarbeitung 13 in Verbindung steht. Die zentrale Datenverarbeitung 13 ist beispielsweise ein Server, mit welchem eine Vielzahl von Abgabestationen 1 zentral verwaltbar sind. Eine Buchung einer Abgabestation 1 mit dem Ziel von der Abgabestation 1 elektrische Energie zu beziehen, kann ein Benutzer mit einem mobilen Endgerät 33 vornehmen, welches über eine Mobilfunkverbindung 46 mit der zentralen Datenverarbeitung 13 kommuniziert. Es ist darauf hinzuweisen, dass hier alle dargestellten Netzwerkkomponenten (Mobilfunkverbindung 46, Internetverbindung 45, Router 32, Netzwerkadapter 31 etc.) nur schematisch sind und die Grundfunktionsweise der Verbindung zwischen Abgabegerät 1, zentraler Datenverarbeitung 13 und mobilem Endgerät 33 verdeutlichen sollen.

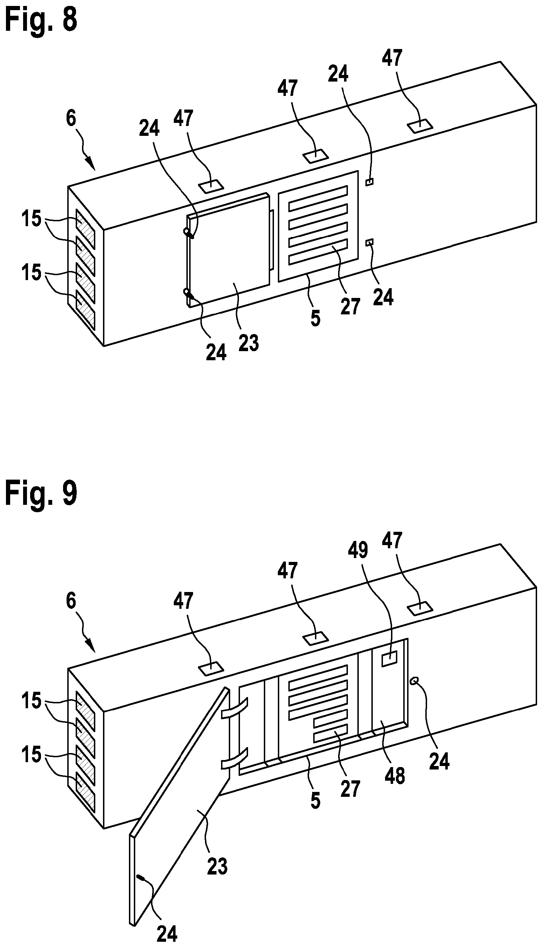

Fig. 8 und Fig. 9 zeigen zwei verschiedene, alternative Ausführungsvarianten von Stromverteilerschienen 6, mit denen die hier beschriebenen Abgabegeräte kombiniert werden können. Diese Stromverteilerschienen 6 sind Alternativen zur Ausführungsvariante einer Stromverteilerschiene 6 gemäß den Fig. 1 und 2. Um mit den in den Fig. 8 und 9 dargestellten Ausführungsvarianten von Stromverteilerschienen 6 verwendet werden zu können, müssen beschriebene Abgabegeräte 1 und insbesondere deren Kupplungen 4 zum Ankuppeln an die entsprechenden Adapterports 5 dieser Ausführungsvarianten von Stromverteilerschienen 6 angepasst sein.

In den Fig. 8 und 9 ist zunächst zu erkennen, dass Adapterports 5 bei diesen Stromverteilerschienen 6 anders ausgebildet sind als bei der Stromverteilerschiene 6 gemäß Fig. 2. Fig. 8 zeigt einen rechteckförmigen Adapterport 5, der in einer Längserstreckungsrichtung der Stromverteilerschiene 6 kompakt ist. Fig. 9 zeigt einen Adapterport 6, der in einer Einbuchtung 48 der Stromverteilerschiene 6 versenkt ist. Dieser Adapterport 5 ist damit besonders gut geschützt. Die (elektrische) Funktionsweise der Adapterport 5 gemäß den Ausführungsvarianten der Fig. 8 und 9 ist letztlich jeweils identisch zur Funktionsweise des Adapterports 5 bei der Ausführungsvariante gemäß den Fig. 1 und 2. Die Adapterports 5 ermöglichen jeweils über Steckeraufnahmen 27 für einzelne Stromübertragungselemente einer entsprechend ausgebildeten Kupplung an dem Abgabegerät Zugang zu den elektrischen Leitern 15 in der Stromverteilerschiene 6. Beide Adapterports 5 gemäß den Fig. 8 und 9 sind jeweils mit einem Deckel 23 abdeckbar, welcher mit einem schematisch dargestellten Riegel 24 verschlossen werden kann. Bei der Stromverteilerschiene gemäß den Fig. 1 und 2 ist es vorgesehen, dass das Abgabegerät mit Hilfe von Haken bzw. Halteklammern an Hinterschnitten an der Stromverteilerschiene ankuppeln kann. Demgegenüber sind bei den Stromverteilerschienen 6 gemäß den Fig. 8 und 9 jeweils explizit Angriffspunkte 47 vorgesehen, die das Eingreifen eines (wie auch immer ausgeführten) mechanischen Kupplungsmechanismusses an dem Abgabegerät 1 ermöglichen, um das Abgabegerät fest mit der Stromverteilerschiene 6 zu verbinden. Als Besonderheit ist bei Ausführungsvariante gemäß Fig. 9 noch dargestellt, dass an dem Adapterport 5 auch ein Netzwerkstecker 49 vorgesehen ist, welcher eine Datenverbindung von dem Abgabegerät zu einer in der Stromverteilerschiene 6 angeordneten (hier nicht dargestellten) Datenleitung ermöglicht.

### Bezugszeichenliste

- 1: Abgabegerät
- 2: elektrischer Speicher
- 3: Kraftfahrzeug
- 4: Kupplung
- 5: Adapterport
- 6: Stromverteilerschiene
- 7: Abgabeanschluss
- 8: Abgabeleitung
- 9: Gehäuse
- 10: Energiezähler
- 11: Steuergerät
- 12: Netzwerkschnittstelle
- 13: Datenverarbeitungssystem
- 14: Stromübertragungselemente
- 15: Leiter
- 16: Halteklammer
- 17: Haken
- 18: Hinterschnitt
- 19: Sicherheitsverschluss
- 20: elektrischer Schalter
- 21: Anzeigeeinrichtung
- 22: Ladestation
- 23: Deckel
- 24: Riegel
- 25: Netzwerkanschluss
- 26: Hochleistungsleiter
- 27: Steckeraufnahmen
- 28: Gehäuseinnenraum
- 29: Geradenstück
- 30: Winkelstück
- 31: Netzwerkadapter
- 32: Router
- 33: mobiles Endgerät
- 34: Schienenhöhe
- 35: Parkhausdecke
- 36: Verbindungsstecker
- 37: konventioneller Parkplatz
- 38: elektrifizierter Parkplatz
- 39: Querschnittsfläche
- 40: Steg
- 41: Gurtabschnitte
- 42: Flansch
- 43: Datenleitung
- 44: Rückwand
- 45: Internetverbindung
- 46: Mobilfunkverbindung
- 47: Angriffspunkt
- 48: Einbuchtung
- 49: Netzwerkschnittstelle

## Patentansprüche

1. Ladestation (22) zum Aufladen eines elektrischen Speichers (2) in einem Kraftfahrzeug (1), umfassend mindestens ein Abgabegerät (1) zur Abgabe von elektrischer Energie an den elektrischen Speicher (2) des Kraftfahrzeuges (3) sowie eine Stromverteilerschiene (6) zur Versorgung des mindestens einen Abgabegerätes (1) mit elektrischer Energie, wobei das mindestens eine Abgabegerät (1) eine Kupplung (4) aufweist, mit welcher das mindestens eine Abgabegerät (1) unmittelbar an einen Adapterport (5) der Stromverteilerschiene (6) anschließbar ist, wobei der Adapterport (5) einen seitlichen Zugangspunkt bildet, an welchem auf die einzelnen Leiter (15) innerhalb der Stromverteilerschiene (6) elektrisch leitend zugegriffen werden kann, wobei das mindestens eine Abgabegerät (1) einen Abgabeanschluss (7) für eine Abgabeleitung (8) zur Abgabe von elektrischer Energie an das Kraftfahrzeug (3) aufweist, wobei die Kupplung (4) und der Abgabeanschluss (7) an oder in einem gemeinsamen Gehäuse (9) angeordnet sind, und wobei in dem Gehäuse (9) ein Energiezähler (10) und ein Steuergerät (11) mit einer Netzwerkschnittstelle (12) angeordnet sind, die dazu eingerichtet sind, die Energie zu zählen, die über den Abgabeanschluss (7) an das Kraftfahrzeug (3) abgegeben wird und Energieabgabedaten über die Netzwerkschnittstelle (12) an ein Datenverarbeitungssystem (13) zu kommunizieren, wobei die Kupplung (4) mindestens zwei elektrisch voneinander getrennte Stromübertragungselemente (14) aufweist, die dazu eingerichtet sind, in einzelne Öffnungen des Adapterports (5) für jeden Leiter (15) in der Stromverteilerschiene (6) einzugreifen und elektrische Verbindungen zu den Leitern (15) in der Stromverteilerschiene (6) herzustellen, wobei das Abgabegerät (1) mindestens eine Halteklammer (16) aufweist, die dazu eingerichtet ist, eine mechanisch feste Verbindung zwischen der Stromverteilerschiene (6) und dem Gehäuse (9) zu bilden, wenn das Abgabegerät (1) an den Adapterport (5) der Stromschiene (6) angeschlossen ist, wobei die mindestens eine Halteklammer (16) mindestens einen Haken (17) aufweist, welcher dazu eingerichtet ist in einen Hinterschnitt (18) an der Stromverteilerschiene (6) einzugreifen, um das Abgabegerät (1) an der Stromverteilerschiene (6) zu halten, wobei das Abgabegerät (1) einen Sicherheitsverschluss (19) aufweist, mit welchem die mindestens eine Halteklammer (16) sperrbar ist, um eine werkzeuglose Demontage des Abgabegerätes (1) von der Stromverteilerschiene (6) zu verhindern.

2. Ladestation (22) nach einem der vorhergehenden Ansprüche, wobei das Gehäuse (9) zur ausschließlichen Befestigung an der Stromverteilerschiene (6) ausgebildet ist.

3. Ladestation (22) nach einem der vorhergehenden Ansprüche, wobei die Netzwerkschnittstelle (12) dazu eingerichtet ist, Daten über mindestens ein Stromübertragungselement (14) zu versenden.

4. Ladestation (22) nach einem der vorhergehenden Ansprüche, wobei das Abgabegerät (1) mindestens einen elektrischen Schalter (20) zur Steuerung der Abgabe von elektrischer Energie an dem Abgabeanschluss (7) aufweist.

5. Ladestation (22) nach Anspruch 4, wobei das Steuergerät (11) dazu eingerichtet ist, den elektrischen Schalter (20) in Abhängigkeit von Steuerdaten zu steuern, die das Steuergerät (11) über die Netzwerkschnittstelle (12) empfängt.

6. Ladestation (22) nach einem der vorhergehenden Ansprüche, wobei das Abgabegerät (1) eine Anzeigeeinrichtung (21) zur visuellen und/oder akustischen Anzeige von Informationen für einen Benutzer des Abgabegeräts (1) aufweist.

7. Ladestation (22) nach einem der vorhergehenden Ansprüche, wobei mittels der Stromverteilerschiene (6) eine Mehrzahl von Abgabegeräten (1) versorgt wird.

8. Verfahren zum Laden eines Kraftfahrzeugs (3) mittels einer Ladestation (22) nach einem der vorhergehenden Ansprüche, aufweisend die folgenden Schritte
a) Aktivieren des Abgabegerätes (1) zur Abgabe von elektrischer Energie mit einem mobilen Endgerät (33), wobei mit dem mobilen Endgerät (33) eine Aktivierungsanfrage an das Datenverarbeitungssystem (13) übermittelt wird und das Datenverarbeitungssystem (13) eine Aktivierung des Abgabegerätes (1) auslöst, wenn die Aktivierungsanfrage erfolgreich war,
b) Bereitstellen von elektrischer Energie an das Abgabegerät (1) über die Stromverteilerschiene (6), und
c) Abgabe von elektrischer Energie von dem Abgabegerät (1) an das Kraftfahrzeug.

## Claims

1. Charging station (22) for charging an electrical storage (2) in a motor vehicle (1), comprising at least one output device (1) for delivering electrical energy to the electrical storage (2) of the motor vehicle (3) as well as a e power distribution busbar (6) for supplying the at least one output device (1) with electrical energy, wherein the at least one output device (1) has a coupling (4), via which the at least one output device (1) is connectable directly to an adapter port (5) of the power distribution busbar (6), wherein the adapter port (5) forms a lateral access point, at which the individual conductors (15) within the power distribution busbar (6) can be accessed electrically conductive, wherein the at least one output device (1) has an output connection (7) for an output line (8) for delivery of electrical energy to the motor vehicle (3), wherein the coupling (4) and the output connection (7) are arranged at or in a common housing (9), and wherein in the housing (9) are arranged an energy meter (10) and a control unit (11) with a network interface (12), which are configured to meter the energy, which is delivered to the motor vehicle (3) via the output connection (7), and to communicate energy delivery data via the network interface (12) to a data processing system (13), wherein the coupling (4) has at least two power transmission elements (14) electrically isolated from each other, which are configured to engage into individual openings of the adapter port (5) for each conductor (15) in the power distribution busbar (6) and to establish electrical connections to the conductors (15) in the power distribution busbar (6), wherein the output device (1) has at least one retaining clamp (16), which is configured to form a mechanically firm connection between the power distribution busbar (6) and the housing (9), in case the output device (1) is connected to the adapter port (5) of the power busbar (6), wherein the at least one retaining clamp (16) comprises at least one hook (17), which is configured to engage into an undercut (18) at the power distribution busbar (6), in order to hold the output device (1) at the power distribution busbar (6), wherein the output device (1) has a safety lock (19), via which the at least one retaining clamp (16) is lockable, in order to avoid a tool-free demounting of the output device (1) from the power distribution busbar (6).

2. Charging station (22) according to one of the preceding claims, wherein the housing (9) is designed for exclusive mounting to the power distribution busbar (6).

3. Charging station (22) according to one of the preceding claims, wherein the network interface (12) is configured to send data via at least one power transmission element (14).

4. Charging station (22) according to one of the preceding claims, wherein the output device (1) has at least one electrical switch (20) for controlling the delivery of electrical energy at the output connection (7).

5. Charging station (22) according to claim 4, wherein the control unit (11) is configured to control the electrical switch (20) depending on control data, which the control unit (11) receives via the network interface (12).

6. Charging station (22) according to one of the preceding claims, wherein the output device (1) has a display device (21) for visual and/or acoustic display of information for a user of the output device (1).

7. Charging station (22) according to one of the preceding claims, wherein via the power distribution busbar (6) a plurality of output devices (1) is supplied.

8. Method for charging a motor vehicle (3) via a charging station (22) according to one of the preceding claims, comprising the following steps
a) Activating via a mobile device (33) the output device (1) for delivering electrical energy, wherein an activating request is sent via the mobile device (33) to the data processing system (13) and the data processing system (13) triggers an activation of the output device (1), if the activating request was successful,
b) Providing via the power distribution busbar (6) electrical energy to the output device (1), and
c) Delivering electrical energy from the output device (1) to the motor vehicle.

## Revendications

1. Station de charge (22) pour charger un accumulateur électrique (2) d'un véhicule automobile (1), comprenant au moins un appareil de distribution (1) pour fournir de l'énergie électrique à l'accumulateur électrique (2) du véhicule automobile (3) ainsi qu'un rail (6) de distribution de courant pour alimenter en énergie électrique ledit au moins un appareil de distribution (1), ledit au moins un appareil de distribution (1) comprenant un organe d'accouplement (4) permettant de connecter ledit au moins un appareil de distribution (1) directement à un port adaptateur (5) du rail (6) de distribution de courant, le port adaptateur (5) formant un point d'accès latéral permettant d'accéder de manière électro-conductrice aux différents conducteurs (15) situés à l'intérieur du rail (6) de distribution de courant, ledit au moins un appareil de distribution (1) comprenant un raccord de distribution (7) pour une ligne de distribution (8) destinée à fournir de l'énergie électrique au véhicule automobile (3), l'organe d'accouplement (4) et le raccord de distribution (7) étant agencés sur un boîtier commun (9) ou dans ce boîtier, un compteur d'énergie (10) et un appareil de commande (11) étant agencés dans le boîtier (9) avec une interface réseau (12), qui sont conçus pour compter l'énergie fournie au véhicule automobile (3) au moyen du raccord de distribution (7) et pour communiquer des données de distribution d'énergie à un système de traitement de données (13) via l'interface réseau (12), l'organe d'accouplement (4) comprenant au moins deux éléments de transmission de courant (14) séparés électriquement l'un de l'autre, qui sont conçus de façon à venir en engagement dans des ouvertures individuelles du port d'adaptateur (5) pour chaque conducteur (15) présent dans le rail (6) de distribution de courant et pour établir des connexions électriques avec les conducteurs (15) présents dans le rail (6) de distribution de courant, le dispositif de distribution (1) comprenant au moins une pince de retenue (16) qui est conçue de manière à former une liaison mécanique solide entre le rail (6) de distribution de courant et le boîtier (9) lorsque l'appareil de distribution (1) est raccordé au port adaptateur (5) du rail (6) de distribution de courant, ladite au moins une pince de retenue (16) présentant au moins un crochet (17) qui est conçu pour venir en engagement dans une contre-dépouille (18) sur le rail (6) de distribution de courant afin de maintenir l'appareil de distribution (1) sur le rail (6) de distribution de courant, le dispositif de distribution (1) comprenant un verrou de sécurité (19) permettant de bloquer ladite au moins une pince de retenue (16) afin d'empêcher le démontage sans outil du dispositif de distribution (1) du rail (6) de distribution de courant.

2. Station de charge (22) selon l'une des revendications précédentes, dans laquelle le boîtier (9) est conçu pour être fixé exclusivement au rail (6) de distribution de courant.

3. Station de charge (22) selon l'une des revendications précédentes, dans laquelle l'interface réseau (12) est conçue de façon à envoyer des données via au moins un élément de transmission de courant (14).

4. Station de charge (22) selon l'une des revendications précédentes, dans laquelle le dispositif de distribution (1) comprend au moins un interrupteur électrique (20) pour commander la distribution d'énergie électrique au niveau du raccord de distribution (7).

5. Station de charge (22) selon la revendication 4, dans laquelle l'appareil de commande (11) est conçu de manière à commander l'interrupteur électrique (20) en fonction de données de commande que l'appareil de commande (11) reçoit via l'interface réseau (12).

6. Station de charge (22) selon l'une des revendications précédentes, dans laquelle le dispositif de distribution (1) comprend un dispositif d'affichage (21) pour afficher visuellement et/ou acoustiquement des informations destinées à un utilisateur du dispositif de distribution (1).

7. Station de charge (22) selon l'une des revendications précédentes, dans laquelle une pluralité d'appareils de distribution (1) sont alimentés au moyen du rail (6) de distribution de courant.

8. Procédé de charge d'un véhicule automobile (3) au moyen d'une station de charge (22) selon l'une des revendications précédentes, comprenant les étapes suivantes
a) activer le dispositif de distribution (1) pour la distribution d'énergie électrique avec un terminal mobile (33), une demande d'activation étant transmise au système de traitement de données (13) avec le terminal mobile (33), et le système de traitement de données (13) déclenchant une activation du dispositif de distribution (1) si la demande d'activation a abouti,
b) fournir de l'énergie électrique à l'appareil de distribution (1) via le rail (6) de distribution de courant, et
c) distribuer de l'énergie électrique de l'appareil de distribution (1) au véhicule automobile.
